# EUROPÄISCHE PATENTSCHRIFT

(11) **EP 3 159 233 B1**
(45) Veröffentlichungstag und Bekanntmachung des Hinweises auf die Patenterteilung: **01.12.2021**
(21) Anmeldenummer: 16002229.9
(22) Anmeldetag: 18.10.2016
(51) Int. Cl.: B60W 20/12, B60W 50/14, B60W 30/188, B60W 50/00

(54) **VERFAHREN ZUM BETREIBEN EINES FAHRZEUGS, INSBESONDERE NUTZFAHRZEUG**
METHOD FOR OPERATING A VEHICLE, IN PARTICULAR COMMERCIAL VEHICLE
PROCÉDÉ DE FONCTIONNEMENT D'UN VÉHICULE AUTOMOBILE, EN PARTICULIER VÉHICULE UTILITAIRE

(30) Priorität: 22.10.2015 DE 102015013699
(43) Veröffentlichungstag der Anmeldung: 26.04.2017
(73) Patentinhaber: MAN Truck & Bus SE, 80995 München (DE)
(72) Erfinder: Wengert, Jochen, 89407 Dillingen / Donau (DE)
(74) Vertreter: Liebl, Thomas

(56) Entgegenhaltungen:
- DE-A1-102005 049 710
- DE-A1-102006 001 818
- DE-A1-102008 010 558
- DE-A1-102014 205 246
- US-A1- 2014 067 247

## Beschreibung

Die Erfindung betrifft ein Verfahren zum Betreiben eines Fahrzeugs, insbesondere eines Nutzfahrzeugs, nach dem Oberbegriff des Anspruchs 1.

Moderne Fahrzeuge, insbesondere Nutzfahrzeuge werden mit Steuergeräten ausgerüstet, an die eine Messtechnik angeschlossen ist, mit der aktuelle Fahrbetriebsgrößen erfasst werden. Solche Fahrzeuge werden vielfach auf derselben Fahrstrecke mit jeweils demselben Streckenprofil eingesetzt und bewegt. Beispielsweise sind dies Stadtbusse im Linienverkehr, mit denen auf denselben Fahrstrecken gefahren wird. Dabei wird jeweils dasselbe Streckenprofil, das insbesondere durch Höhenprofile, Haltestellen, Kurvenstrecken, etc. gekennzeichnet ist, abgefahren. Die Fahrzeiten für solche Fahrstrecken sind überschaubar und solchen Fahrstrecken können relativ einfach strategienrelevante Teilstücke zugeordnet werden, in denen ein Wechsel der Betriebsstrategie erforderlich oder zumindest zweckmäßig ist. Unter Betriebsstrategie wird hier insbesondere eine Schaltstrategie und/oder Motorbetriebsstrategie, insbesondere bei Hybridfahrzeugen eine Zuschaltung eines Verbrennungsmotors zu einem Elektroantrieb verstanden. Andere Beispiele für einen Fahrzeugeinsatz auf jeweils den gleichen Fahrstrecken sind ein Teilezulieferverkehr in einem Betriebsgelände oder Materialbewegungen auf Großbaustellen. Das erfindungsgemäße Verfahren soll aber nicht auf die genannten Beispiel beschränkt sein.

Die Betriebsstrategie beim vorstehenden Fahrzeugbetrieb wird bisher weitgehend unabhängig vom Steuergerät von einem Fahrer des Fahrzeugs bestimmt und ausgeführt. Obwohl das Streckenprofil für die vorstehenden Fahrten jeweils dasselbe ist, wird somit die Betriebsstrategie (zum Beispiel Getriebesteuerung/Hybridstrategien) des Fahrzeugs jeweils individuell verschieden abhängig von der Person des Fahrers und dessen aktuellem Fahrgefühl festgelegt und durchgeführt. Ersichtlich ist damit eine an das Streckenprofil angepasste Optimierung der Betriebsstrategie für niedrige Betriebskosten und/oder Fahrzeugemissionen nur bedingt möglich, da durch den individuellen Betrieb große Abweichungen und Streuungen bezüglich einer optimalen Betriebsstrategie vorliegen.

Die DE 10 2006 001 818 A1 offenbart ein Verfahren und eine Vorrichtung zur Fahrerunterstützung beim Fahrbetrieb eines Nutzfahrzeugs, bei dem eine vorausliegende Topographie der Fahrtroute, nämlich das vorausliegende Höhenprofil, berücksichtigt wird. Das Höhenprofil kann dabei mit einem Höhenprofilrecorder aufgezeichnet werden, das als eigenes Steuergerät oder als eigenes Modul eines Steuergeräts fest im Fahrzeug installiert ist. Konkret werden die Topographie- bzw. Höhendaten für bevorstehende Fahrtrouten abgerufen, um die richtige Gangempfehlung mitzuteilen bzw. bei einem automatisierten Schaltgetriebe den richtigen Gang einzulegen.

Die DE 10 2008 010 558 A1 betrifft ein Verfahren zum Betreiben einer Hybridantriebsvorrichtung eines Kraftfahrzeugs, die eine Brennkraftmaschine und eine elektrische Maschine aufweist, wobei für die Antriebsaggregate in Abhängigkeit einer Fahrstrecke eine Betriebsstrategie eingestellt wird. Dabei wird die Fahrstrecke gefahren und mindestens ein Fahrprofil ermittelt und gespeichert, wobei die Betriebsstrategie bei einem Wiederbefahren der Fahrstrecke in Abhängigkeit von dem Fahrprofil beeinflusst wird. Als Betriebsstrategie wird eine Ladestrategie für einen der elektrischen Maschine zugeordneten elektrischen Speicher verwendet. Konkret wird hier der Ladezustand des elektrischen Speichers berücksichtigt und ein motorischer bzw. generatorischer Betrieb der elektrischen Maschine eingestellt, und zwar zu Zeitpunkten, in denen dies durch Vorkenntnis der Fahrstrecke und/oder des Fahrprofils vorteilhaft erscheint. Dabei wird es als besonders vorteilhaft angesehen, wenn die Betriebsstrategie einen vorbekannten externen Ladevorgang des elektrischen Speichers berücksichtigt. Ist also bekannt, wann der nächste externe Ladevorgang erfolgen soll, ist es möglich, für eine längere Zeitdauer rein elektrisch zu fahren, da der elektrische Speicher weiter entladen werden kann als im üblichen Betrieb.

Die DE 10 2014 205 246 A1 betrifft ein Verfahren zum Steuern eines Hybridantriebs eines Fahrzeugs, bei dem einer Betriebsstrategie ein minimaler Energieverbrauch des Energiespeichers zugeordnet wird.

Die DE 10 2005 049 710 A1 offenbart ein Verfahren zur Beeinflussung eines automatisierten Schaltgetriebes unter Berücksichtigung des Fahrtwiderstandes. Dabei ist vorgesehen, dass in Verbindung mit annähernd baugleichen städtischen Linienbussen lediglich ein Bus mit der Fahrwiderstandserkennungseinrichtung ausgerüstet ist, da dieser nacheinander auf verschiedenen Linien eingesetzt werden kann und so die optimalen Parameter für das Schaltprogramm der Getriebesteuerung auf der jeweiligen Linie erhalten werden können.

Aufgabe der Erfindung ist es daher, ein Verfahren vorzuschlagen, mit denen bei den vorstehenden Fahrten die Betriebsweise des Fahrzeuges effektiv optimiert werden kann.

Diese Aufgabe wird mit den Merkmalen des Anspruchs 1.

Gemäß Anspruch 1 werden bei dem erfindungsgemäßen Verfahren zum Betreiben eines Fahrzeugs, insbesondere eines Nutzfahrzeugs, mit einer fahrzeugseitig vorhandenen Messtechnik aktuelle Fahrbetriebsgrößen erfasst und einem Steuergerät zugeführt, wobei das Fahrzeug immer oder zumindest vielfach auf derselben Fahrstrecke mit demselben Streckenprofil eingesetzt und bewegt wird.

Solche erfasste Fahrbetriebsgrößen werden im Steuergerät durch einen Lernalgorithmus dem Fahrstreckenverlauf und somit dem Streckenprofil dieser wiederholt befahrenen Fahrstrecke zugeordnet und entsprechend gespeichert. Ein solcher Lernprozess kann selbsttätig oder gegebenenfalls willkürlich durch einen Fahrer gestartet werden, wenn der Einsatz des Fahrzeugs beispielsweise im Linienverkehr auf derselben Fahrstrecke festgelegt wurde und erste Fahrten darauf durchgeführt werden.

Das Steuergerät kann dann bei einer Fahrt anhand der zeitlichen Verläufe der aktuell erfassten Fahrbetriebsgrößen und einem Vergleich mit den streckenbezogenen, gelernten und gespeicherten Fahrbetriebsgrößen erkennen, ob sich das Fahrzeug auf der relevanten bzw. auf der zumindest vielfach befahrenen Fahrstrecke befindet und wenn ja, auf welchem aktuellen Teilstück der Fahrstrecke mit welchem Streckenprofil sich das Fahrzeug gerade befindet.

Im Steuergerät sind weiter für den Fahrstreckenverlauf, insbesondere für die mit dem Steuergerät erkennbaren Teilstücke der relevanten Fahrstrecke, Betriebsstrategieanweisungen festgelegt und gespeichert. Diese Betriebsstrategieanweisungen werden erfindungsgemäß durch einen Lernalgorithmus erhalten und abgelegt, indem unter der Vorgabe eines optimierten, vorzugsweise kosten- und/oder verbrauchsoptimierten, Fahrens eine gemittelte Betriebsstrategie mehrerer Fahrer über mehrere Fahrten erfasst und im Steuergerät gespeichert wird. Wenn bei einer Fahrt dann vom Steuergerät ein bestimmtes Teilstück der Fahrstrecke aktuell erkannt wird, erfolgt die Ausgabe der entsprechend zugeordneten Betriebsstrategieanweisung vom Steuergerät für einen Eingriff in den Fahrbetrieb für eine optimierte Fahrweise des Nutzfahrzeugs. Dabei wird zur Erzielung einer optimierten Betriebsweise des Fahrzeugs das Streckenprofil des erkannten Teilstücks von den Betriebsstrategieanweisungen berücksichtigt und abgebildet wird.

Der Vorteil einer solchen erweiterten Steuergerätefunktion liegt in der optimierten Betriebsweise des Fahrzeugs bzw. in verringerten Betriebskosten und verringerten Emissionen des Fahrzeugs. Da diese erweiterte Steuergerätefunktion mit üblicherweise bereits im Fahrzeug vorhandener Messtechnik und im vorhandenen Steuergerät realisiert werden kann, werden vorteilhaft dadurch auch die Produktionskosten des Fahrzeugs nicht erhöht.

Die vom Steuergerät jeweils abgegebene Betriebsstrategieanweisung kann für einen selbsttätigen Eingriff in den Fahrbetrieb verwendet werden. Alternativ oder zusätzlich kann eine solche Betriebsstrategieanweisung auch als optisches und/oder akustisches und/oder haptisches Signal als Anweisung oder Empfehlung an einen Fahrer für einen Eingriff in den Fahrbetrieb ausgegeben werden.

Unter dem Begriff Betriebsstrategien werden Schaltstrategien und/oder Motorbetriebsstrategien verstanden. Diese Strategien können eine Hybridstrategie zur Zuschaltung eines Verbrennungsmotors bei seriellen Hybridantrieben und/oder eine Rekuperationsstrategie und/oder eine Getriebesteuerstrategie zum Zurück- und/oder Hochschalten umfassen. Allgemein wird darunter aber auch jede Strategie für eine gezielte Beschleunigung oder ein gezieltes Abbremsen des Fahrzeugs verstanden.

Zur Erkennung eines bestimmten Teilstücks einer Fahrstrecke können grundsätzlich alle streckenrelevanten und streckenprofilrelevanten, fahrzeugseitig erfassten Fahrbetriebsgrößen ausgewertet werden. Dafür besonders geeignet und für eine sichere Teilstückerkennung auch ausreichend sind Motordrehzahlen und/oder Motordrehmomente und/oder Raddrehzahlen.

Vom Steuergerät deutlich erkennbare und auswertbare Streckenprofilelemente sind erfindungsgemäß Haltestellen, eventuell zusätzlich auch Langsamfahrt-Teilstücke und/oder Fahrbahnsteigungen und/oder Kurven, denen Betriebsstrategieanweisungen für eine optimierte Fahrweise zugeordnet werden.

Das vorstehend genannte Steuergerät kann grundsätzlich als separate Einheit ausgeführt sein. Zweckmäßig wird die beschriebene Steuergerätefunktion jedoch in ein fahrzeugseitig vorhandenes Betriebssteuergerät integriert.

Das Verfahren wird erfindungsgemäß bei einem Nutzfahrzeug als Stadtbus, der im Linienverkehr betrieben wird, eingesetzt, wodurch die Betriebskosten und/oder die Emissionen für Stadtbusfahrten gesenkt werden können.

Anhand einer Zeichnung wird die Erfindung weiter erläutert.

Die einzige Figur zeigt ein Verfahrensschema für eine Fahrt eines Stadtbusses:
Nach dem Start des Stadtbusses zu einer Linienfahrt (dargestellt durch Block 1) wird ein Durchlauf in Gang gesetzt, bei dem ein Steuergerät anhand gelernter und streckenbezogen gespeicherter Fahrbetriebsgrößen erkennt und feststellt, welches Teilstück der Fahrstrecke der Stadtbus gerade erreicht. Dies ist im Ablaufschema durch die nacheinander jeweils durchlaufenen und jeweils aufeinanderfolgend den Streckenteilstücken zugeordneten Entscheidungsrauten 2, 3, 4 dargestellt.

Erkennt das Steuergerät, das ein bestimmtes Teilstück, beispielsweise das erste Teilstück I erreicht ist, wird die jeweils dazu abgespeicherte Betriebsstrategie, beispielsweise hier dargestellt mit Block 5 ausgegeben. Entsprechend werden für das nachfolgende Teilstück II die dazu gespeicherten Betriebsstrategieanweisungen gemäß Block 6, usw. ausgegeben. Wenn dann das letzte Teilstück der Fahrstrecke erreicht ist, wird die zugeordnete Betriebsstrategieanweisung gemäß Block 7 ausgegeben.

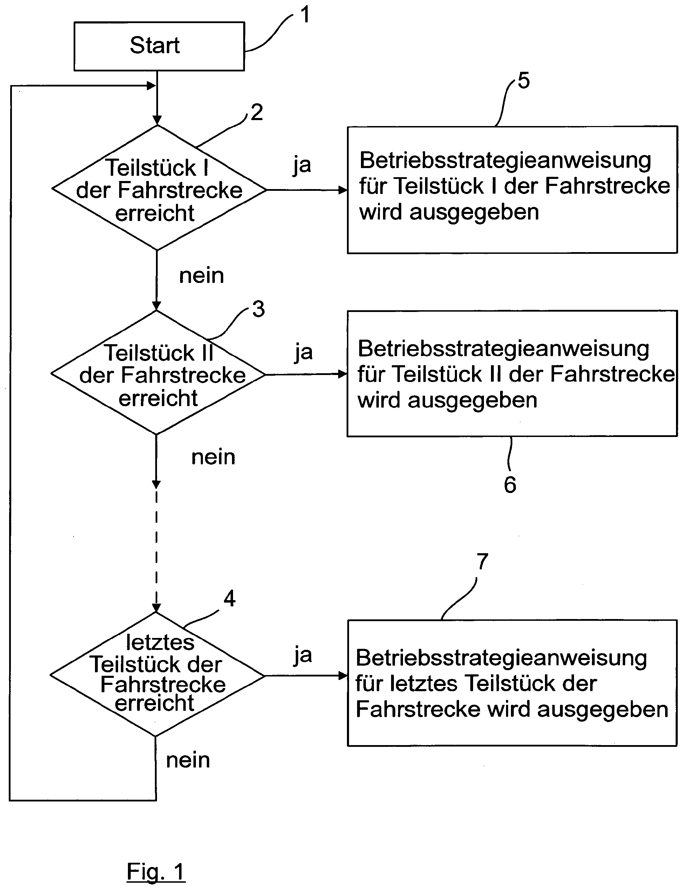

Im Schema der Fig. 1 ist die Fahrstrecke in konkrete Teilstücke mit jeweils zugeordneten Betriebsstrategieanweisungen aufgeteilt. Wenn die gesamte Fahrstrecke in sehr kleine aufeinanderfolgende Teilstücke aufgeteilt wird und mit dem Lernalgorithmus entsprechende Informationen gespeichert werden, kann auch eine quasi kontinuierliche streckenabhängige Änderung und Anpassung der Betriebsstrategie durchgeführt werden.

### Bezugszeichenliste

- 1: Block
- 2: Entscheidungsraute
- 3: Entscheidungsraute
- 4: Entscheidungsraute
- 5: Block
- 6: Block
- 7: Block

## Patentansprüche

1. Verfahren zum Betreiben eines Fahrzeugs, insbesondere eines Nutzfahrzeugs,
mit einem Steuergerät und mit einer Messtechnik, die aktuelle Fahrbetriebsgrößen erfasst, die dem Steuergerät zugeführt werden, wobei das Fahrzeug immer auf derselben Fahrstrecke mit demselben Streckenprofil eingesetzt und bewegt wird,
wobei Fahrbetriebsgrößen im Steuergerät durch einen Lernalgorithmus dem Fahrstreckenverlauf und damit dem Streckenprofil dieser wiederholt befahrenden Fahrstrecke zugeordnet und gespeichert werden,
wobei das Steuergerät bei einer Fahrt anhand der zeitlichen Verläufe der aktuellen erfassten Fahrbetriebsgrößen und einem Vergleich mit den streckenbezogen, gelernten und gespeicherten Fahrbetriebsgrößen jeweils erkennt, auf welchem aktuellen Teilstück der Fahrstrecke mit welchem Streckenprofil sich das Fahrzeug gerade befindet (1, 2, 3),
wobei im Steuergerät für den Fahrstreckenverlauf Betriebsstrategieanweisungen für eine optimierte Fahrweise festgelegt werden, die jeweils bei einem erkannten aktuellen Teilstück der Fahrstrecke für einen Eingriff in den Fahrbetrieb des Fahrzeugs ausgegeben werden (5, 6, 7), wobei die Betriebsstrategieanweisungen das Streckenprofil des erkannten Teilstücks entsprechend berücksichtigen und abbilden, **dadurch gekennzeichnet,**
**dass** das Fahrzeug ein als Linienbus auf einer Linienfahrt eingesetzter Stadtbus ist, dass vom Steuergerät Haltestellen als Streckenprofilelemente erkannt und ausgewertet werden, denen Betriebsstrategieanweisungen für eine optimierte Fahrweise zugeordnet werden, und
**dass** die Betriebsstrategieanweisungen durch einen Lernalgorithmus erhalten und abgelegt werden, indem unter der Vorgabe eines optimierten Fahrens eine gemittelte Betriebsstrategie mehrerer Fahrer über mehrere Fahrten erfasst und im Steuergerät gespeichert wird.

2. Verfahren nach Anspruch 1, **dadurch gekennzeichnet, dass** die Betriebsstrategieanweisungen für einen selbsttätigen Eingriff in den Fahrbetrieb und/oder für eine optische und/oder akustische und/oder haptische Anweisung an einen Fahrer für einen Eingriff in den Fahrbetrieb ausgegeben werden (5, 6, 7).

3. Verfahren nach Anspruch 1 oder Anspruch 2, **dadurch gekennzeichnet, dass** Betriebsstrategien für das Fahrzeug Schaltstrategien und/oder Motorbetriebsstrategien sind, insbesondere eine Hybridstrategie zur Zuschaltung eines Verbrennungsmotors bei seriellen Hybridantrieben, und/oder eine Rekuperationsstrategie und/oder eine Getriebesteuerstrategie zum Zurück- und/oder Hochschalten sind.

4. Verfahren nach einem der Ansprüche 1 bis 3, **dadurch gekennzeichnet, dass** als erfasste und ausgewertete Fahrbetriebsgröße die Motordrehzahl und/oder das Motordrehmoment und/oder wenigstens eine Raddrehzahl verwendet wird.

5. Verfahren nach einem der Ansprüche 1 bis 4, **dadurch gekennzeichnet, dass** das Steuergerät und die Messtechnik übliche in einem Fahrzeug vorhandene Bauteile sind, die auch für andere Fahrzeugsysteme verwendet und für die Verwendung im vorliegenden Verfahren entsprechend ausgestaltet werden.

## Claims

1. Method for operating a vehicle, in particular a commercial vehicle,
with a control device and with measuring instruments, which record current vehicle operating variables, which are fed to the control device, the vehicle always being used and moved along the same route with the same route profile,
wherein, in the control device, vehicle operating variables are assigned by a learning algorithm to the course of the route, and consequently to the route profile, of this repeatedly driven route and are stored,
wherein, during the journey, the control device detects on the basis of the variations over time of the current recorded vehicle operating variables and a comparison with the route-related learned and stored vehicle operating variables in each case on which particular section of the route with which route profile the vehicle is currently located at the time (1, 2, 3),
wherein operating strategy instructions for an optimized manner of driving are set out in the control device for the course of the route and, when a particular section of the route is detected, they are in each case output for an intervention to be made in the driving of the vehicle (5, 6, 7), the operating strategy instructions appropriately taking into account and displaying the route profile of the detected section, **characterized**
**in that** the vehicle is an urban bus operated as a scheduled bus in regular service,
**in that** stops are recorded and evaluated by the control device as route profile elements, to which operating strategy instructions for an optimized manner of driving are assigned, and
**in that** the operating strategy instructions are received and kept by a learning algorithm, in that, with the specification of optimized driving, an averaged operating strategy of multiple drivers over multiple routes is recorded and stored in the control device.

2. Method according to Claim 1, **characterized in that** the operating strategy instructions are output for an automatic intervention to be made in the driving and/or for a visual and/or acoustic and/or haptic indication to be given to a driver for making an intervention in the driving (5, 6, 7).

3. Method according to Claim 1 or Claim 2, **characterized in that** operating strategies for the vehicle are shifting strategies and/or engine operating strategies, in particular a hybrid strategy for activating an internal combustion engine in serial hybrid drives, and/or a recuperation strategy and/or a gear control strategy for changing down and/or changing up.

4. Method according one of Claims 1 to 3, **characterized in that** the engine speed and/or the engine torque and/or at least one wheel speed are/is used as recorded and evaluated vehicle operating variables.

5. Method according to one of Claims 1 to 4, **characterized in that** the control device and the measuring instruments are components that are usually present in a vehicle, which are also used for other vehicle systems and are designed appropriately for use in the present method.

## Revendications

1. Procédé pour faire fonctionner un véhicule, notamment un véhicule utilitaire,
comprenant un contrôleur et comprenant des instruments de mesure qui acquièrent des grandeurs opérationnelles de déplacement actuelles, lesquelles sont acheminées au contrôleur, le véhicule étant utilisé et se déplaçant toujours sur le même trajet de déplacement avec le même profil de trajet,
des grandeurs opérationnelles de déplacement étant, dans le contrôleur, associées au tracé du trajet de déplacement par un algorithme d'apprentissage et ainsi au profil de trajet de ce trajet de déplacement parcouru de manière répétitive, puis mémorisées,
le contrôleur, lors d'un déplacement, à l'aide des courbes dans le temps des grandeurs opérationnelles de déplacement actuellement acquises et d'une comparaison avec les grandeurs opérationnelles de déplacement relatives au trajet apprises et mémorisées, reconnaissant respectivement la portion actuelle du trajet de déplacement, ainsi que le profil de trajet de celle-ci, sur laquelle se trouve momentanément le véhicule (1, 2, 3),
des instructions de stratégie de fonctionnement pour un mode de déplacement optimisé étant spécifiées dans le contrôleur pour le tracé du trajet de déplacement, lesquelles sont respectivement délivrées lors d'une portion actuelle reconnue du trajet de déplacement pour une intervention dans le mode de déplacement du véhicule (5, 6, 7), les instructions de stratégie de fonctionnement tenant compte en conséquence du profil de trajet de la portion reconnue et le représentant, **caractérisé en ce**
**que** le véhicule est un autobus urbain utilisé en tant qu'autobus de ligne sur un service de ligne,
**que** des points d'arrêt sont reconnus et interprétés par le contrôleur comme des éléments de profil de trajet auxquels sont associées des instructions de stratégie de fonctionnement pour un mode de déplacement optimisé, et
**que** les instructions de stratégie de fonctionnement sont obtenues par un algorithme d'apprentissage et stockées en acquérant, après avoir prédéfini un déplacement optimisé, une stratégie de fonctionnement moyenne de plusieurs conducteurs sur plusieurs déplacements et en les mémorisant dans le contrôleur.

2. Procédé selon la revendication 1, **caractérisé en ce que** les instructions de stratégie de fonctionnement sont délivrées pour une intervention automatique dans le mode de déplacement et/ou pour une instruction visuelle et/ou sonore et/ou haptique à un conducteur pour une intervention dans le mode de déplacement (5, 6, 7).

3. Procédé selon la revendication 1 ou la revendication 2, **caractérisé en ce que** les stratégies de fonctionnement pour le véhicule sont des stratégies de changement de rapport et/ou des stratégies de fonctionnement du moteur, notamment une stratégie hybride en vue de mettre en circuit un moteur à combustion interne dans le cas des systèmes de propulsion hybrides en série, et/ou une stratégie de récupération et/ou une stratégie de commande de boîte de vitesses pour le passage à un rapport inférieur et/ou supérieur.

4. Procédé selon l'une des revendications 1 à 3, **caractérisé en ce que** la grandeur opérationnelle de déplacement acquise et interprétée est le régime du moteur et/ou le couple du moteur et/ou au moins une vitesse de rotation de roue.

5. Procédé selon l'une des revendications 1 à 4, **caractérisé en ce que** le contrôleur et les instruments de mesure sont des composants qui sont habituellement présents dans un véhicule, lesquels sont également utilisés pour d'autres systèmes du véhicule et sont conçus en conséquence pour une utilisation dans le présent procédé.
